# EUROPÄISCHE PATENTSCHRIFT

(11) **EP 1 327 846 B1**
(45) Veröffentlichungstag und Bekanntmachung des Hinweises auf die Patenterteilung: **11.07.2007**
(21) Anmeldenummer: 03000369.3
(22) Anmeldetag: 10.01.2003
(51) Int. Cl.: F28D 1/03, F28F 1/12

(54) **Wärmetauscher sowie Verfahren zur Herstellung eines Wärmetauschers**
Heat exchanger and method for manufacturing same
Echangeur de chaleur et sa méthode de fabrication

(30) Priorität: 10.01.2002 DE 10200586
(43) Veröffentlichungstag der Anmeldung: 16.07.2003
(73) Patentinhaber: Behr GmbH & Co. KG, 70469 Stuttgart (DE)
(72) Erfinder: Hägele, Jürgen, Dipl.-Ing., 70460 Stuttgart (DE); Helms, Werner, Dipl.-Ing., 73730 Esslingen (DE); Skiba, Erwin, 70563 Stuttgart (DE)

(56) Entgegenhaltungen:
- DE-C1- 19 922 673
- US-A- 6 000 461

## Beschreibung

Die Erfindung betrifft einen Wärmetauscher, insbesondere für Kraftfahrzeuge, gemäß dem Oberbegriff des Anspruches 1 sowie ein Verfahren gemäß dem Oberbegriff des Anspruches 8.

Aus der DE 199 22 673 C1 ist ein Wärmetauscher mit zwei Sammelrohren bekannt, welche zwischen sich Profilrohrabschnitte und eine Lamellenanordnung aufnehmen. Hierbei ist zwischen dem Sammelrohr und der Lamellenanordnung an der Außenseite des Profilrohrabschnittes eine Sperre zur Verhinderung des Lötmittelflusses beim Löten vorgesehen. Die Sperre kann hierbei durch eine Prägung oder durch einen Auftrag hergestellt werden.

Die US 6000461 offenbart einen Wärmetauscher mir einer Lotplattierung und einer Lotunterbrechung in Rohrlängsrichtung.

Eine derartige Anordnung lässt jedoch noch Wünsche offen. Aufgabe der Erfindung ist es, einen verbesserten Wärmetauscher sowie ein Verfahren zur Herstellung eines solchen zur Verfügung zu stellen.

Diese Aufgabe wird gelöst durch einen Wärmetauscher mit den Merkmalen des Anspruches 1 sowie durch ein Verfahren mit den Merkmalen des Anspruches 6. Vorteilhafte Ausgestaltungen sind Gegenstand der Unteransprüche.

Erfindungsgemäß wird mindestens eine Vielzahl von Lotunterbrechungen der Lotschicht der Profilrohre vorgesehen. Vorzugsweise reicht diese bis in das Grundmaterial der Profilrohre, so dass die Lotschicht in mehrere einzelne Bereiche unterteilt ist.

Vorzugsweise handelt es sich bei den Profilrohren um Profilrohre, die aus lotplattierten Bändern geschweißt oder gefaltet sind. Aufgrund der Herstellung sind häufig in Längsrichtung der Profilrohre verlaufende Nuten vorhanden, welche zu unerwünschten Lotverteilungen beim Löten infolge Kapillarwirkung führen. Diese Nuten werden vorzugsweise durch die Lotunterbrechung unterbrochen. Dabei kann die Lotunterbrechung bspw. V-förmig oder trapezförmig ausgestaltet sein. Die Anordnung mehrerer Lotunterbrechungen, bspw. dreier Lotunterbrechungen, dicht nebeneinander ist ebenfalls möglich, wobei diese Mehrfach-Lotunterbrechung einer einzelnen Lotunterbrechung im folgenden gleichgesetzt wird.

Gemäß einer bevorzugten Ausführungsform sind die Lotunterbrechungen in äquidistanten Abständen angeordnet, so dass beim Zusammenbau der Profilrohre und Lamellenanordnungen zwischen zwei benachbarten Berührungslinien eines Profilrohres und einer Lamellenanordnung, d.h. zwischen zwei Rippen, eine Lotunterbrechung angeordnet ist. Durch die Anordnung einer Vielzahl von äquidistanten Unterbrechungen sind die Werkzeuge zur Herstellung der Lotunterbrechung unabhängig von der Länge der Profilrohre, wodurch sich die Herstellungskosten verringern. Die Lotunterbrechungen bewirken eine Unterbrechung der Kapillarwirkung der Rippen der Lamellenanordnung im Bereich Profilrohr/Lamellenanordnung. Ferner bewirken die Unterbrechungen eine Vergrößerung der Reibung zwischen Profilrohr und Rippe, so dass ein Knicken oder Verschieben der Rippe während dem Kassettiervorgang erschwert wird. Dies ermöglicht bspw. auch die Verwendung höherer Rippen.

Die Herstellung der Lotunterbrechungen erfolgt vorzugsweise mittels Prägen, jedoch sind auch andere Verfahren möglich.

Im folgenden wird die Erfindung anhand von Ausführungsbeispielen unter Bezugnahme auf die Zeichnung im Einzelnen erläutert. In der Zeichnung zeigen:
- Fig. 1 a-1 h: schematische Ansichten von Profilrohren,
- Fig. 2: eine Detaildarstellung eines Querschnittes von Fig. 1g im Bereich einer Lotunterbrechung,
- Fig. 3a-3c: Längsschnitte durch Profilrohre,
- Fig. 4: eine schematische Seitenansicht eines Wärmetauschers, und
- Fig. 5: eine Detailansicht von Fig. 4.

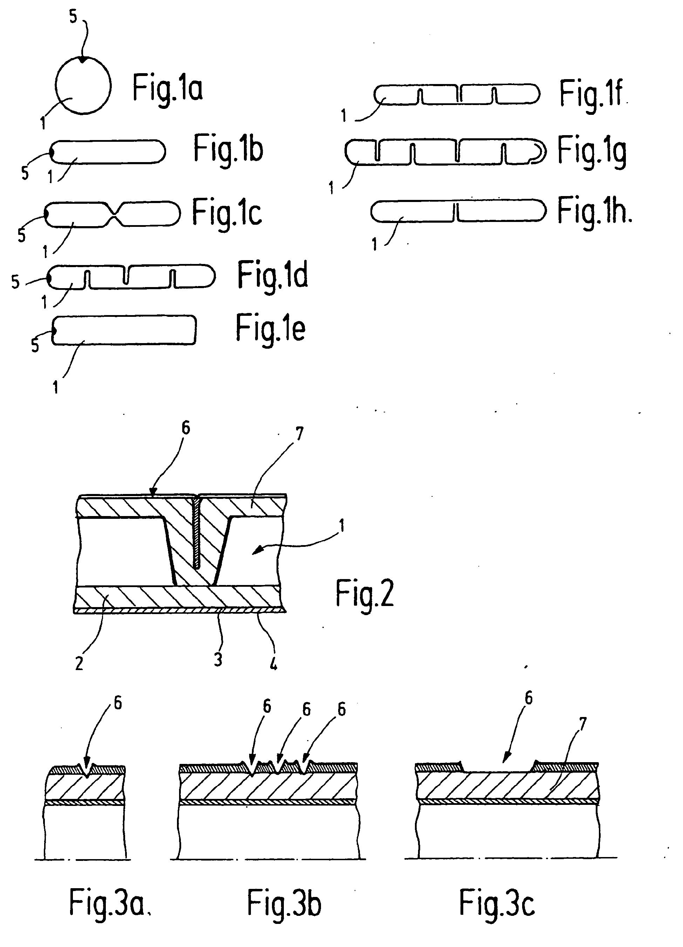

In den Figuren 1a bis 1e sind geschweißte und in den Figuren 1f bis 1h gefaltete Profilrohre 1 dargestellt, die aus lotplattierten Bändern 2 bestehen. Zur Herstellung der Profilrohre 1 werden Bänder 3 mit Lot (Lotschicht 4) plattiert und gebogen bzw. gefaltet, bis sie ihre Form haben. Gegebenenfalls erfolgt eine Verschweißung der Bandlängsenden mittels einer Schweißnaht 5, wie in den Figuren 1a bis 1e dargestellt ist. Die Lotschicht 4 ist im Ausführungsbeispiel auf der Außenseite des Profilrohres 1 vorgesehen, kann jedoch auch innen oder beidseitig vorgesehen sein.

Die Profilrohre 1 sind, wie in den Figuren 3a bis 3c dargestellt, mit Lotunterbrechungen 6 versehen, welche die Lotschicht 4 vollständig unterbrechen und zumindest teilweise bis in das Grundmaterial 7 eindringen. Hierbei kann die Lotunterbrechung 6 bspw. eine V-förmige Gestalt, die Gestalt mehrerer dicht nebeneinander angeordneter V-förmiger Vertiefungen oder aber die Gestalt einer breiten Rinne aufweisen.

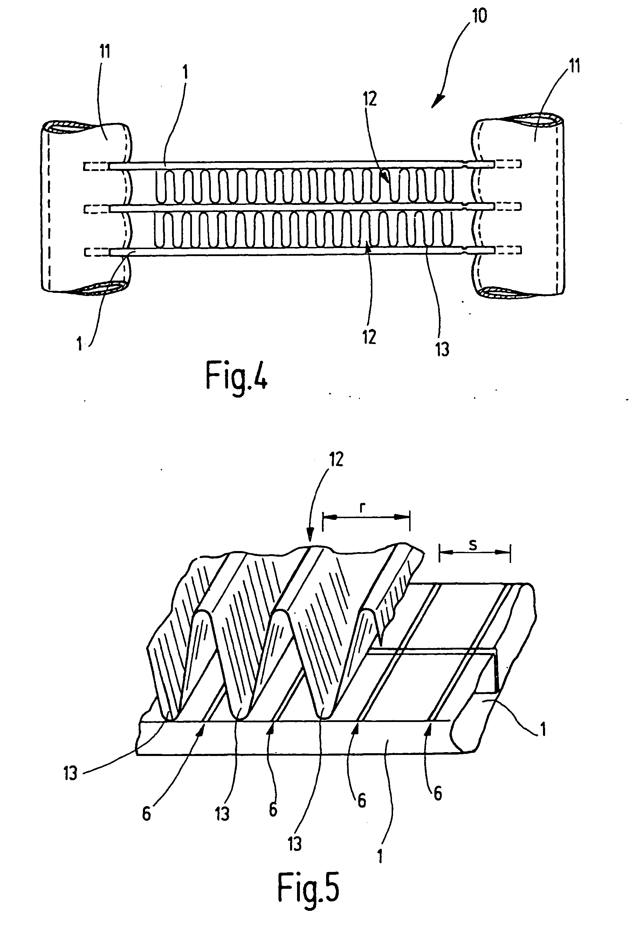

Gemäß einem in den Figuren 4 und 5 dargestellten Ausführungsbeispiel sind die Profilrohre 1 Teil eines Wärmetauschers 10 und verbinden zwei Sammelrohre 11 miteinander. Zwischen zwei benachbarten Profilrohren 1 ist eine Lamellenanordnung 12 angeordnet.

Wie in Fig. 5 vergrößert dargestellt ist, sind die Profilrohre 1 mit einer Vielzahl von Lotunterbrechungen 6 versehen, welche gemäß der Darstellung von Fig. 5 in Lücke mit einzelnen Rippen 13 der Lamellenanordnung 12 angeordnet sind. Hierbei ergibt sich die Lage der Rippen 13 zur Lotunterbrechung 6 zufällig während des Montageprozesses. Der Abstand s der Lotunterbrechung 6 muss nicht konstant oder periodisch sein. Er kann bspw. schwanken zwischen 0,2 und 5 mm. Entsprechendes gilt für den Abstand r der Rippen 13. Infolge der Lotunterbrechung 6 erfolgt eine Unterbrechung des Lotflusses innerhalb des Profilrohr/Lamellenbereichs beim Verlöten.

Die Lotunterbrechungen 6 können vor der Umformung der lotplattierten Bänder 2 beispielsweise mit Hilfe einer Prägewalze hergestellt werden. Alternativ kann auch das fertige Profilrohr 1 beidseitig mit zwei Prägewalzen bearbeitet werden.

Ebenso ist die Verwendung eines Prägestempels oder einer Prägerolle, welche in Querrichtung über das Profilrohr rollt, möglich. Alternativ kann ein Ritzwerkzeug vorgesehen sein, welches die Profilrohre 1 vor dem Zusammenbau derart einritzt, dass die Profilrohre 1 mit erfindungsgemäßen Lotunterbrechungen 6 versehen werden. Beliebige andere Trenn- oder Umformverfahren sind möglich, wie bspw. Schleifen.

### Bezugszeichenliste

- 1: Profilrohr
- 2: lotplattiertes Band
- 3: Band
- 4: Lotschicht
- 5: Schweißnaht
- 6: Lotunterbrechung
- 7: Grundmaterial
- 10: Wärmetauscher
- 11: Sammelrohr
- 12: Lamellenanordnung
- 13: Rippe
- r, s: Abstand

## Patentansprüche

1. Wärmetauscher, insbesondere für ein Kraftfahrzeug, mit Profilrohren (1), die parallel zueinander angeordnet sind und an ihren beiden Enden an je einem Sammelrohr (11) befestigt sind, und mit Lamellenanordnungen (12), die zwischen zwei benachbarten Seiten zweier Profilrohre (1) angelötet sind, wobei die Profilrohre, (1) mit einer Lotschicht (4) versehen sind, **dadurch gekennzeichnet, dass** eine Vielzahl von Lotunterbrechungen (6) vorgesehen sind, wobei die Lotunterbrechungen (6) in Querrichtung des Profilrohres (1) verlaufen und jeweils zwischen zwei Rippen (13) der Lamellenanordnung vorgesehen sind.

2. Wärmetauscher nach Anspruch 1, **dadurch gekennzeichnet, dass** die Lotunterbrechung (6) bis in das Grundmaterial (7) des Profilrohres (1) reicht.

3. Wärmetauscher nach einem der vorstehenden Ansprüche, **dadurch gekennzeichnet, dass** das Profilrohr (1) aus einem oder mehreren lotplattierten Bändern (2) geschweißt oder gefaltet ist.

4. Wärmetauscher nach einem der vorhergehenden Ansprüche 1 bis 3, **dadurch gekennzeichnet, dass** das Profilrohr (1) mindestens eine in Längsrichtung verlaufende Nut an den Verbindungslinien der Längsseiten des Bandes (2) und/oder infolge von Biegungen oder Faltungen aufweist, wobei die Lotunterbrechung (6) die Nut unterbricht.

5. Wärmetauscher nach einem der vorstehenden Ansprüche, **dadurch gekennzeichnet, dass** zwischen zwei benachbarten Berührungslinien eines Profilrohres (1) und einer Lamellenanordnung (12) eine oder mehrere Lotunterbrechungen (6) angeordnet ist.

6. Verfahren zur Herstellung eines Wärmetauschers nach einem der vorhergehenden Ansprüche, insbesondere für ein Kraftfahrzeug, mit Profilrohren (1), die parallel zueinander angeordnet und an ihren beiden Enden an je einem Sammelrohr (11) befestigt werden, und mit Lamellenanordnungen (12), die zwischen zwei benachbarten Seiten zweier Profilrohre (1) angelötet werden, wobei das Grundmaterial (7) jedes Profilrohres (1) mit einer Lotschicht (4) versehen wird und somit die Profilrohre (1) mit einer Lotschicht (4) versehen sind, wobei eine Vielzahl von Lotunterbrechungen (6) vorgesehen sind, wobei die Lotunterbrechungen (6) in Querrichtung des Profilrohres (1) verlaufen und jeweils zwischen zwei Rippen 13 der Lamellenanordnung vorgesehen sind

7. Verfahren nach Anspruch 6, **dadurch gekennzeichnet, dass** die Lotunterbrechung (6) das Grundmaterial (7) des Profilrohres (1) an die Oberfläche bringt.

8. Verfahren nach einem der Ansprüche 6 bis 7, **dadurch gekennzeichnet, dass** das Profilrohr (1) aus einem oder mehreren lotplattierten Bändern (2) gefertigt wird.

9. Verfahren nach Anspruch 8, **dadurch gekennzeichnet, dass** das oder die lotplattierten Bänder (2) vor dem Biegen bzw. Falten mit mehreren Lotunterbrechungen (6) versehen werden.

10. Verfahren nach Anspruch 9, **dadurch gekennzeichnet, dass** das oder die lotplattierten Bänder (2) gebogen, gefaltet oder geschweißt werden und vor dem Zusammenbau mit den Lotunterbrechungen (6) versehen werden.

11. Verfahren nach einem der Ansprüche 6 bis 10, **dadurch gekennzeichnet, dass** die Lotunterbrechungen (6) mittel Prägen hergestellt werden.

## Claims

1. A heat exchanger, in particular for a motor vehicle, having section tubes (1) which are positioned parallel to one another and both ends of which are fixed to a collecting tube (11), and lamellar arrangements (12) which are soldered between two adjacent sides of two section tubes (1), the section tubes (1) being provided with a layer of solder (4),
**characterised in that**
a plurality of solder gaps (6) are provided, the solder gaps (6) running at right angles to the section tube (1) and each being provided between two ribs (13) of the lamellar arrangement.

2. A heat exchanger in accordance with claim 1,
**characterised in that**
the solder gap (6) extends into the base material (7) of the section tube (1).

3. A heat exchanger in accordance with one of the preceding claims,
**characterised in that**
the section tube (1) is welded or folded from one or more solder-plated strips (2).

4. A heat exchanger in accordance with one of preceding claims 1 to 3,
**characterised in that**
the section tube (1) has at least one channel running longitudinally along the connecting line between the longitudinal sides of the strip (2) and/or due to bending or folding, the solder gap (6) interrupting the channel.

5. A heat exchanger in accordance with one of the preceding claims,
**characterised in that**
positioned between two adjacent contact lines between a section tube (1) and a strip lamellar arrangement (12) is/are one or more solder gaps (6).

6. A process for the manufacture of a heat exchanger in accordance with one of the preceding claims, in particular for a motor vehicle, having section tubes (1) which are positioned parallel to one another and both ends of which are fixed to a collecting tube (11), and lamellar arrangements (12) which are soldered between two adjacent sides of two section tubes (1), the base material (7) of each section tube (1) being provided with a layer of solder (4) and the section tube (1) thus being provided with a layer of solder (4), a plurality of solder gaps (6) being provided, said solder gaps (6) running at right angles to the section tube (1) and being positioned between two ribs (13) of the lamellar arrangement (12).

7. A process in accordance with claim 1,
**characterised in that**
the solder gap (6) brings the base material (7) of the section tube (1) to the surface.

8. A process in accordance with one of claims 6 to 7,
**characterised in that**
the section tube (1) is manufactured from one or more solder-plated strips (2).

9. A process in accordance with claim 8,
**characterised in that**
the solder-plated strip(s) (2) is/are provided with a plurality of solder gaps (6) prior to bending/folding.

10. A process in accordance with claim 9,
**characterised in that**
the solder-plated strip(s) (2) is/are bent, folded or welded and provided with the solder gaps (6) prior to assembly.

11. A process in accordance with one of claims 6 to 10,
**characterised in that**
the solder gaps (6) are produced by means of stamping.

## Revendications

1. Echangeur de chaleur, en particulier pour un véhicule automobile, comprenant des tubes profilés (1) qui sont disposés parallèlement entre eux et sont fixés, au niveau de leurs deux extrémités, à chaque fois sur un tuyau collecteur (11), et comprenant des agencements d'ailettes (12) qui sont brasés entre deux côtés voisins de deux tubes profilés (1), où les tubes profilés (1) sont dotés d'une couche de métal d'apport de brasage (4), **caractérisé en ce qu'**il est prévu une multiplicité d'interruptions (6) de métal d'apport de brasage, où les interruptions (6) de métal d'apport de brasage s'étendent dans la direction transversale du tube profilé (1) et sont prévues, à chaque fois, entre deux nervures (13) de l'agencement d'ailettes.

2. Echangeur de chaleur selon la revendication 1, **caractérisé en ce que** l'interruption (6) de métal d'apport de brasage va jusqu'au matériau de base (7) du tube profilé (1).

3. Echangeur de chaleur selon l'une ou l'autre des revendications précédentes, **caractérisé en ce que** le tube profilé (1) est soudé ou plié à partir d'une bande ou de plusieurs bandes (2) plaquée(s) par brasage.

4. Echangeur de chaleur selon l'une quelconque des revendications 1 à 3, **caractérisé en ce que** le tube profilé (1), au niveau des limites de jonction des grands côtés de la bande (2) et / ou en raison de courbures ou de pliages, présente au moins une rainure s'étendant dans le sens longitudinal, où l'interruption (6) de métal d'apport de brasage interrompt la rainure.

5. Echangeur de chaleur selon l'une quelconque des revendications précédentes, **caractérisé en ce qu'**une interruption ou plusieurs interruptions (6) de métal d'apport de brasage est ou sont disposée(s) entre deux lignes de contact contiguës d'un tube profilé (1) et d'un agencement d'ailettes (12).

6. Procédé de fabrication d'un échangeur de chaleur selon l'une quelconque des revendications précédentes, en particulier pour un véhicule automobile, comprenant des tubes profilés (1) qui sont disposés parallèlement entre eux et fixés, au niveau de leurs deux extrémités, à chaque fois sur un tuyau collecteur (11), et comprenant des agencements d'ailettes (12) qui sont brasés entre deux côtés voisins de deux tubes profilés (1), où le matériau de base (7) de chaque tube profilé (1) est doté d'une couche de métal d'apport de brasage (4) et, par conséquent, les tubes profilés (1) sont dotés d'une couche de métal d'apport de brasage (4), où il est prévu une multiplicité d'interruptions (6) de métal d'apport de brasage, où les interruptions (6) de métal d'apport de brasage s'étendent dans la direction transversale du tube profilé (1) et sont prévues, à chaque fois, entre deux nervures (13) de l'agencement d'ailettes.

7. Procédé selon la revendication 6, **caractérisé en ce que** l'interruption (6) de métal d'apport de brasage fait apparaître, à la surface, le matériau de base (7) du tube profilé (1) .

8. Procédé selon la revendication 6 ou 7, **caractérisé en ce que** le tube profilé (1) est fabriqué à partir d'une bande ou de plusieurs bandes (2) plaquée(s) par brasage.

9. Procédé selon la revendication 8, **caractérisé en ce que** la bande ou les bandes (2) plaquée(s) par brasage est ou sont dotée(s), avant d'être recourbée(s) ou pliée(s), de plusieurs interruptions (6) de métal d'apport de brasage.

10. Procédé selon la revendication 9, **caractérisé en ce que** la bande ou les bandes (2) plaquée(s) par brasage est ou sont recourbée(s), pliée(s) ou soudée(s) et est ou sont dotée(s), avant l'assemblage, d'interruptions (6) de métal d'apport de brasage.

11. Procédé selon l'une quelconque des revendications 6 à 10, **caractérisé en ce que** les interruptions (6) de métal d'apport de brasage sont réalisées par estampage.
